(19) Europäisches Patentamt
European Patent Office
Office européen des brevets

(11) **EP 4 661 273 A1**

(12) **EUROPEAN PATENT APPLICATION**
published in accordance with Art. 153(4) EPC

(43) Date of publication:
**10.12.2025 Bulletin 2025/50**

(21) Application number: **23920696.4**

(22) Date of filing: **25.07.2023**

(51) International Patent Classification (IPC):
**H02M 3/335** (2006.01)    **H02M 3/338** (2006.01)

(52) Cooperative Patent Classification (CPC):
**H02J 3/32; H02M 3/00; H02M 3/335; H02M 3/338;**
**Y02B 70/10**

(86) International application number:
**PCT/CN2023/109076**

(87) International publication number:
**WO 2024/164500 (15.08.2024 Gazette 2024/33)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **07.02.2023  CN 202310097462**

(71) Applicant: **GD Midea Air-Conditioning Equipment**
**Co., Ltd.**
**Foshan, Guangdong 528311 (CN)**

(72) Inventors:
• **CHEN, Xin**
**Foshan, Guangdong 528311 (CN)**

• **JIANG, Haihao**
**Foshan, Guangdong 528311 (CN)**
• **QIU, Yu**
**Foshan, Guangdong 528311 (CN)**
• **ZENG, Xianjie**
**Foshan, Guangdong 528311 (CN)**
• **SHI, Haixu**
**Foshan, Guangdong 528311 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **OPERATION CONTROL METHOD AND APPARATUS FOR ENERGY STORAGE DC-TO-DC CONVERTER, AND ENERGY STORAGE SYSTEM**

(57)     Disclosed herein are an operation control method and apparatus for an energy storage DC-to-DC converter, and an energy storage system. The energy storage DC-to-DC converter (20) is used for connecting an energy storage module (10) to a direct current bus, and the energy storage DC-to-DC converter (20) comprises a resonant conversion circuit (210) and a buck-boost conversion circuit (220) sequentially cascaded with the energy storage module (10). The method comprises: acquiring a current control parameter on the basis of a state of linearly amplifying the battery voltage of the energy storage module (10) by the resonant conversion circuit (210); and adjusting the duty ratio of a first driving signal and the duty ratio of a second driving signal on the basis of the magnitude relationship between the current control parameter and a target control parameter, wherein the first driving signal is complementary to the second driving signal, and the first driving signal and the second driving signal are used for correspondingly driving a boost switch and a buck switch of the buck-boost conversion circuit (220).

acquiring, in a condition of linearly amplifying a battery voltage of the energy storage module based on the resonant conversion circuit, a current control parameter;  — S101

adjusting a duty ratio of a first drive signal and a duty ratio of a second drive signal based on a magnitude relationship between the current control parameter and a target control parameter, the first drive signal being complementary to the second drive signal, the first drive signal and the second drive signal being used to correspondingly drive a boost switch and a buck switch of the buck-boost conversion circuit  — S102

FIG. 2

EP 4 661 273 A1

Description

CROSS-REFERENCE TO RELATED APPLICATION

This application claims a priority to Chinese patent application No. CN 202310097462.9, filed on February 7, 2023, the entire contents of which are incorporated herein by reference.

TECHNICAL FIELD

The invention belongs to the field of energy storage technology and relates to an operational control method and apparatus for an energy storage DC-to-DC converter, and an energy storage system.

BACKGROUND

In an application environment of a household energy storage system, an energy storage DC-to-DC converter (bidirectional DC-DC converter), in order to meet high gain requirements when a low voltage battery is connected into the energy storage system, generally adopts a two-stage structure, that is, a front stage and rear stage, the front stage performing a boost conversion and then the rear stage performing a boost control. Optionally, the two-stage structure can be composed of a front-stage LLC resonant conversion and a rear-stage BUCK-BOOST conversion. The two-stage structure of the energy storage DC-to-DC converter needs to have an ability of bidirectional energy flow to realize a charging function and discharging function of an energy storage module. A control device can respond to control the energy storage DC-to-DC converter to switch among states such as charging, discharging, no-load and standby through an instruction.

A switching of charging and discharging achieved by actively controlling an energy flow direction of the two-stage structure of the energy storage DC-to-DC converter, requires a switching logic judgment and a certain switching time, which affects a switching efficiency of charging and discharging.

SUMMARY

An operational control method, apparatus for an energy storage DC-to-DC converter and an energy storage system is provided according to an embodiment of the invention, to achieve a seamless switching between a charging function and a discharging function of the energy storage DC-to-DC converter, thereby satisfying a demand for rapid conversion of charging and discharging of the energy storage DC-to-DC converter in the energy storage system.

According to a first aspect of the invention, an operational control method for an energy storage DC-to-DC converter is provided. The energy storage DC-to-DC converter is used to connect an energy storage module to a DC bus, the energy storage DC-to-DC converter comprising a resonant conversion circuit and a buck-boost conversion circuit which are sequentially cascaded with the energy storage module, the method comprising: acquiring, in a condition of linearly amplifying a battery voltage of the energy storage module based on the resonant conversion circuit, a current control parameter; and adjusting a duty ratio of a first drive signal and a duty ratio of a second drive signal based on a magnitude relationship between the current control parameter and a target control parameter, the first drive signal being complementary to the second drive signal, the first drive signal and the second drive signal being used to correspondingly drive a boost switch and a buck switch of the buck-boost conversion circuit.

According to a second aspect of the invention, an operation control apparatus for an energy storage DC-to-DC converter is provided. The energy storage DC-to-DC converter is used to connect an energy storage module to a DC bus, the energy storage DC-to-DC converter comprising a resonant conversion circuit and a buck-boost conversion circuit which are sequentially cascaded with the energy storage module, the apparatus comprising: a control parameter acquisition unit, configured for acquiring, in a condition of linearly amplifying a battery voltage of the energy storage module based on the resonant conversion circuit, a current control parameter; and a duty ratio adjustment unit configured for adjusting a duty ratio of a first drive signal and a duty ratio of a second drive signal based on a magnitude relationship between the current control parameter and a target control parameter, the first drive signal being complementary to the second drive signal, the first drive signal and the second drive signal being used to correspondingly drive a boost switch and a buck switch of the buck-boost conversion circuit.

According to a third aspect of the invention, an energy storage system, comprising an energy storage module, an energy storage DC-to-DC converter and a control device is provided according to an embodiment of the invention. The energy storage DC-to-DC converter is used to connect an energy storage module to a DC bus. The energy storage DC-to-DC converter comprises a resonant conversion circuit and a buck-boost conversion circuit which are sequentially cascaded with the energy storage module. The control device comprises a memory, a processor, and a computer program stored on the memory and executable on the processor. The processor executes the computer program to implement the operational control method for the energy storage DC-to-DC converter.

BRIEF DESCRIPTION OF DRAWINGS

In order to more clearly illustrate the technical solutions in the embodiments of the invention, the following briefly introduces the accompanying drawings required for describing the embodiments. Obviously, the accompanying drawings described below are some embodiments of the invention. For those skilled in the art, other accompanying drawings can be obtained based on these accompanying drawings without any creative work.

FIG. 1 shows a schematic structural diagram of an energy storage system according to some embodiments of the invention;
FIG. 2 shows a flow chart of an operational control method for an energy storage DC-to-DC converter according to some embodiments of the invention;
FIG. 3 shows an operational control logic of a buck-boost conversion circuit in FIG. 1;
FIG. 4 shows a topological structure of an energy storage DC-to-DC converter in FIG. 1;
FIG. 5 shows an operational control logic of a resonant conversion circuit in FIG. 1;
FIG. 6 shows a functional module diagram of an operational control apparatus for an energy storage DC-to-DC converter according to some embodiments of the invention; and
FIG. 7 shows a schematic structural diagram of a control device in FIG. 1.

## DETAILED DESCRIPTION

The technical solutions in the embodiments of the invention will be clearly and completely described below in conjunction with the accompanying drawings in the embodiments of the invention. Obviously, the described embodiments are only a portion of the embodiments, rather than all the embodiments of the invention. Based on the embodiments in the invention, all other embodiments obtained by those skilled in the art without making any creative work shall fall within the scope of protection of the invention.

In the invention, descriptions such as "first", "second", etc. are only used for descriptive purposes and cannot be understood as indicating or implying their relative importance or implicitly indicating the number of the indicated technical features. Therefore, the features defined as "first" or "second" may explicitly or implicitly comprise at least one of the features. The technical solutions between the various embodiments can be combined with each other, but they must be based on the fact that they can be implemented by those skilled in the art. When the combination of technical solutions is contradictory or cannot be implemented, it should be deemed that such combination of technical solutions does not exist and is not within the scope of protection required by this invention.

An operational control method for an energy storage DC-to-DC converter is provided according to an embodiment of the invention, which is used to control the energy storage DC-to-DC converter having a two-stage DC conversion circuit during the entire operation process after a soft start is completed, to enable the two-stage energy storage DC-to-DC converter to be seamlessly switched between a charging function and a discharging function without executing a switching judgment logic for the charging function and discharging function.

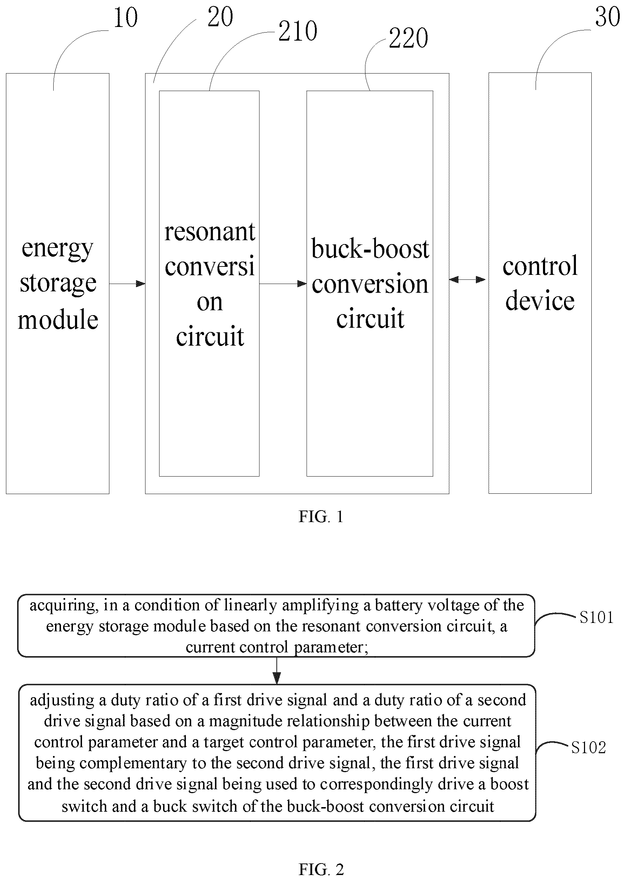

As shown in FIG. 1, an energy storage system is provided according to an embodiment of the disclosure, and comprises an energy storage module 10, an energy storage DC-to-DC converter 20 and a control device 30. The energy storage DC-to-DC converter 20 is used to connect the energy storage module 10 to a DC bus. The energy storage DC-to-DC converter 20 comprises a two-stage DC conversion circuit. The two-stage DC conversion circuit comprises a resonant conversion circuit 210 and a buck-boost conversion circuit 220 which are sequentially cascaded with the energy storage module 10. It should be understood that the resonant conversion circuit 210 is a bidirectional LLC topology, which may be various commonly used bidirectional LLC topologies and derivative topologies thereof, such as full-bridge LLC topology, half-bridge LLC topology, multiple LLCs in parallel, multiple transformers in series and/or parallel. The buck-boost conversion circuit 220 (also called a BUCK-BOOST conversion circuit) may adopt a BUCK-BOOST topology structure and derivative topologies thereof, such as multiplex bidirectional BUCK-BOOST conversion and interleaved parallel BUCK-BOOST conversion. The energy storage module 10 may be a storage battery. The control device 30 may comprise a memory, a processor, and a computer program stored on the memory and executable on the processor. The processor executes the computer program to implement the operational control method for the energy storage DC-to-DC converter.

As shown in FIG. 2, an operational control method for an energy storage DC-to-DC converter provided in an embodiment of the invention may comprise step S101 and step S102.

In step S101: in a condition that a battery voltage of the energy storage module is linearly amplified based on a resonant conversion circuit, a current control parameter is acquired.

It can be understood that the current control parameter may be a parameter such as a current DC bus voltage, a current output power of the energy storage DC-to-DC converter 20, a current inductor-current of the buck-boost conversion circuit 220, a battery SOC of the energy storage module 10 and the like, which are not limited in the embodiments of the invention.

As shown in FIGs. 1 and 2, when the energy storage module 10 is connected to a DC bus through the energy storage DC-to-DC converter 20, a current DC bus voltage can be detected by a voltage sensor disposed at a DC bus terminal of the energy storage DC-to-DC converter 20.

Optionally, a current inductor-current can be detected by a current sensor disposed near an inductor of the buck-boost conversion circuit 220. A current DC bus current can be detected by a current sensor disposed at a DC bus terminal of the energy storage DC-to-DC converter 20, and a current output power can be calculated based on a DC bus current and a DC straight line voltage.

In step S102: a duty ratio of a first drive signal and a duty ratio of a second drive signal are adjusted based on a magnitude relationship between the current control parameter and a target control parameter, the first drive signal being complementary to the second drive signal, the first drive signal and the second drive signal being used to correspondingly drive a boost switch and a buck switch of the buck-boost conversion circuit 220 during an operation of the energy storage DC-to-DC converter 20.

It can be understood that the target control parameter corresponds to the current control parameter. Optionally, when the current control parameter is a current DC bus voltage, the target control parameter is a target DC bus voltage. Optionally, when the current control parameter is a current output power of the energy storage DC-to-DC converter 20, the target control parameter is a target output power. Optionally, when the current control parameter is a current inductor-current of the buck-boost conversion circuit 220, the target control parameter is a reference current.

In a home scenario, in addition to that the energy storage module 10 can be connected to the DC bus, photovoltaic modules can also be connected to the DC bus through a unidirectional DC-DC converter. A power grid can be connected to the DC bus through a DC-AC converter. Various loads (such as air conditioners, refrigerators and other household appliances) can be connected to the DC bus through unidirectional DC-DC converters. Optionally, the target DC bus voltage is a pre-given reference voltage value for the DC bus terminal and will not change with a change of external environment, while the current DC bus voltage is a voltage value actually measured at a DC bus terminal of the energy storage DC-to-DC converter 20 and will change with an external environment. Optionally, the change of external environment may refer to changes of load, grid failures, changes in light that affect power generation of photovoltaic modules, and the like.

Optionally, the target output power may be a pre-given reference voltage value for the energy storage DC-to-DC converter 20 and will not change with a change of external environment; and the reference current may also be a pre-given reference current value for the buck-boost conversion circuit 220. However, the current output power is a product of a voltage value and a current value actually measured at the DC bus terminal of the energy storage DC-to-DC converter 20. The current inductor-current is a current value actually measured near an inductor of the buck-boost conversion circuit 220, and will change with the external environment.

Since the change of external environment will cause changes in a charging and discharging power of system, a pair of complementary drive pulses (a first drive signal and a second drive signal) can be obtained, in an embodiment of the invention, through a closed-loop control of voltage and current to control a DC bus voltage, to have an ability to independently support a DC bus voltage, and quickly make a power response within a range of maximum charging power and maximum discharging power to suppress fluctuations of the DC bus, and in turn to improve a robustness and dynamic performance of entire system.

It can be understood that if the current control parameter is the current DC bus voltage, the duty ratio of the first drive signal and the duty ratio of the second drive signal can be adjusted based on the magnitude relationship between the current DC bus voltage and the target DC bus voltage. By adjusting the duty ratio of the first drive signal and the duty ratio of the second drive signal based on the magnitude relationship between the current DC bus voltage and the target DC bus voltage, the energy storage DC-to-DC converter 20 is always made, during the charging function and discharging function are switched therebetween and a charging and discharging power changes with the external environment (for example, the charging and discharging power changes from 1000 W to 2000 W, from 1000 W to -1000 W), the current DC bus voltage to be stabilized near the target DC bus voltage based on the pair of complementary drive pulses which are the first drive signal and the second drive signal, to achieve function switching without executing other switching judgment logic.

Optionally, if the current control parameter is the current DC bus voltage and the target control parameter is the target DC bus voltage, the above step S102 may comprise step S1021 to step S1023.

In step S1021: a first PI adjustment is performed based on the current DC bus voltage and the target DC bus voltage to obtain a reference current.

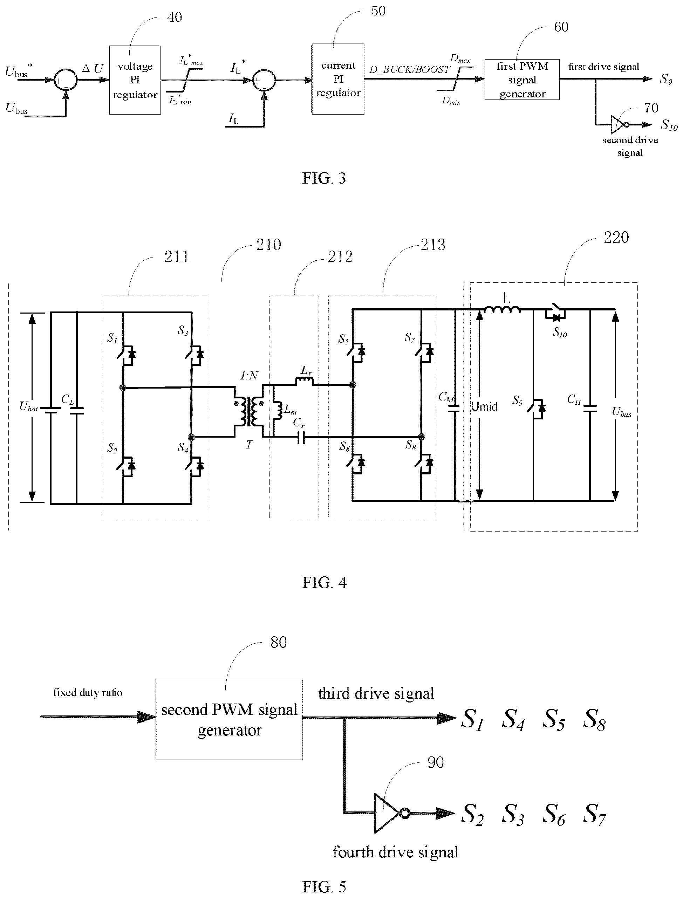

As shown in FIG. 3, in order to improve an accuracy of the reference current obtained, a voltage deviation $\triangle U$ between the current DC bus voltage $U_{bus}$ and the target DC bus voltage $U_{bus}^*$ can be determined; the first PI adjustment is performed on the voltage deviation $\triangle U$ by a voltage PI regulator 40 to obtain a current calculation result; and the reference current $I_L^*$ is obtained according to the current calculation result.

It can be understood that a current limit range may be preset, the current limit range may be compared with the current calculation result, and the reference current $I_L^*$ may be determined based on a result of the comparison. In a simpler way, after the current calculation result is obtained, the current calculation result can be directly used as the reference current $I_L^*$.

Optionally, the current limit range is constructed based on an upper limit current threshold $I_L^*{}_{max}$ and a lower limit current threshold $I_L^*{}_{min}$. If the current calculation result is within the current limit range constructed by the upper limit current threshold $I_L^*{}_{max}$ and the lower limit current threshold $I_L^*{}_{min}$, the current calculation result is used as the reference current $I_L^*$. In a condition that the current calculation result is not within the current limit range, if the current calculation result is greater than the upper limit current threshold $I_L*_{max}$, the upper limit current threshold $I_L*_{max}$ is used as the reference current $I_L*$; if the current calculation result is less than the lower limit current threshold $I_L*_{min}$, the lower limit current threshold $I_L*_{min}$ is used as the reference current $I_L*$. Therefore, an amplitude of the reference current $I_L*$ is limited by the current limit range, to prevent the reference current $I_L*$ from being too large or too small to cause damage to components of the energy storage DC-to-DC converter.

Alternatively, if the DC bus voltage does not need to be stabilized by the energy storage DC-to-DC converter, but is stabilized by other converters (such as photovoltaic inverters), in a condition that the DC bus voltage is fixed, the charging and discharging power can be controlled by directly controlling an inductor-current of the buck-boost conversion circuit. At this time, the reference current $I_L*$ shown in FIG. 3 is a pre-given fixed value and does not need to be calculated in step S1021. At this time, seamless switching between a charging function and a discharging function is achieved by stabilizing the inductor-current.

In step S1022: a current inductor-current of the buck-boost conversion circuit is obtained, and a second PI adjustment is performed based on the current inductor-current and the reference current to obtain a duty ratio parameter.

As shown in FIG. 3, the inductor-current flowing through a first inductor in the buck-boost conversion circuit can be detected by a current sensor to obtain a current inductor-current $I_L$; a current deviation between the current inductor-current $I_L$ and the reference current $I_L*$ is determined; a second PI adjustment is performed on the current deviation by a current PI regulator 50 to obtain a duty ratio calculation result D_BUCK/BOOST; and a duty ratio parameter is obtained according to the duty ratio calculation result D_BUCK/BOOST.

It can be understood that a duty ratio limit range may be preset. The preset duty ratio limit range may be compared with the duty ratio calculation result D_BUCK/BOOST, and the duty ratio parameter may be determined based on a result of the comparison. In a simpler way, after the duty ratio calculation result D_BUCK/BOOST is obtained, the duty ratio calculation result D_BUCK/BOOST can be directly used as the duty ratio parameter.

As shown in FIG. 3, the duty ratio limit range can be constructed based on an upper limit duty ratio threshold $D_{max}$ and a lower limit duty ratio threshold $D_{min}$. If the duty ratio calculation result D_BUCK/BOOST is within a duty ratio limit range constructed by the upper limit duty ratio threshold $D_{max}$ and the lower limit duty ratio threshold $D_{min}$, the duty ratio calculation result D_BUCK/BOOST is used as the duty ratio parameter. While in a condition that the duty ratio calculation result D_BUCK/BOOST is not within the duty ratio limit range, if the duty ratio calculation result D_BUCK/BOOST is greater than the upper limit duty ratio threshold $D_{max}$, the upper limit

duty ratio threshold $D_{max}$ is used as the duty ratio parameter; if the duty ratio calculation result D_BUCK/BOOST is less than the lower limit duty ratio threshold $D_{min}$, the lower limit duty ratio threshold $D_{min}$ is used as the duty ratio parameter. Since a value of the duty ratio parameter should range from 0 to 1, the upper limit duty ratio threshold $D_{max}$ is 1; the lower limit duty ratio threshold $D_{min}$ is 0. However, the duty ratio calculation result may exceed a range of 0 to 1. Thus, the above technical solution can enable an erroneous duty ratio parameter to be avoided from being input into a first pulse width modulation (PWM) signal generator 60, to make the first PWM signal generator 60 to always output the first drive signal and the second drive signal with a correct duty ratio. Of course, if the duty ratio calculation result is not within the duty ratio limit range, a preset fixed duty ratio value within the duty ratio limit range may be further input into the first PWM signal generator 60. It can be understood that the first drive signal and the second drive signal may be a pair of complementary PWM signals.

In step S1023: the duty ratio of the first drive signal and the duty ratio of the second drive signal are adjusted based on the duty ratio parameter.

As shown in FIG. 4, a simpler two-stage topology structure of an energy storage DC-to-DC converter is provided. The resonant conversion circuit 210 is a bidirectional full-bridge LLC topology, and the buck-boost conversion circuit 220 adopts a simple BUCK-BOOST topology. While an energy storage module is discharging outward, the resonant conversion circuit 210 first increases a battery voltage $U_{bat}$ provided by the energy storage module to a medium-voltage-side voltage $U_{mid}$, and an electrical isolation between an energy storage module side and a medium voltage side is realized through a transformer T, and then the BUCK-BOOST conversion circuit 220 increases the medium-voltage-side voltage $U_{mid}$ output by the resonant conversion circuit 210 to a high-voltage-side voltage $U_{bus}$ (DC bus voltage). While the energy storage module is charged, the BUCK-BOOST conversion circuit 220 first reduces the high-voltage-side voltage $U_{bus}$ to the medium-voltage-side voltage $U_{mid}$, and then the resonant conversion circuit 210 reduces the medium-voltage-side voltage $U_{mid}$ to a battery voltage $U_{bat}$ of the energy storage module side.

As shown in FIG. 4, a boost switch of the BUCK-BOOST conversion circuit 220 is a boost switch tube S9, and a buck switch of the BUCK-BOOST conversion circuit 220 is a buck switch tube S10. Based on this, a topology of the BUCK-BOOST conversion circuit 220 may at least comprise: the boost switch tube S9, the buck switch tube S10, a first inductor L (which is an energy storage inductor) and a DC bus capacitor $C_H$. Optionally, an end of the first inductor L is connected to an output end of a second switch network 213, and another end of the first inductor L is respectively connected to an end of the buck switch tube S10 and an end of the boost switch tube S9. Another output end of the second switch network 213 and another end of the boost switch tube S9 each are connected to a side of the DC bus capacitor $C_H$. Another end of the buck switch tube S10 is connected to another side of the DC bus capacitor $C_H$. The current inductor-current $I_L$ refers to a current of the first inductor L.

As shown in FIGs. 3 and 4, optionally, the duty ratio parameter obtained may be input into a first PWM signal generator 60, and the first PWM signal generator 60 outputs a first drive signal for driving the boost switch tube S9; the first drive signal is input into a first inverter 70, and the first inverter 70 outputs a second drive signal for driving the buck switch tube S10.

Optionally, the second drive signal outputted by the first inverter 70 has a certain dead zone, to prevent a circuit from being damaged due to a delay of hardware circuit and a shoot-through power switch tube.

It can be understood that before the step S101 is executed, the buck-boost conversion circuit 220 may be controlled to perform a soft start. After a soft start of the buck-boost conversion circuit 220 is completed, the above steps S101 to S102 are executed.

Optionally, a DC bus capacitor $C_H$ of a buck-boost conversion circuit 220 may be intermittently charged until a high-voltage-side voltage of the buck-boost conversion circuit 220 reaches a target DC bus voltage to achieve a control of soft start of the buck-boost conversion circuit 220.

It should be understood that a soft start of the buck-boost conversion circuit 220 can be performed after a soft start of the resonant conversion circuit 210 is completed. After the soft start of the resonant conversion circuit 210 is completed, it is not necessarily necessary to control the buck-boost conversion circuit 220 to perform a soft start. Therefore, after the soft start of the resonant conversion circuit 210 is completed, it can be judged, in response to a second start instruction of the buck-boost conversion circuit 220, whether a soft start condition is met at the current moment. If the soft start condition is met at the current moment, the DC bus capacitor $C_H$ of the buck-boost conversion circuit 220 is intermittently charged.

Optionally, it can be judged whether a high-voltage-side voltage of the buck-boost conversion circuit 220 is less than a target DC bus voltage. If the high-voltage-side voltage of the buck-boost conversion circuit 220 is less than the target DC bus voltage, it is judged that a soft start condition is met at the current moment; if the high-voltage-side voltage of the buck-boost conversion circuit 220 is not less than the target DC bus voltage, it is indicated that the soft start condition is not met at the current moment, and the DC bus capacitor $C_H$ of the buck-boost conversion circuit 220 does not need to be intermittently charged, and thus the buck-boost conversion circuit 220 can directly enter a stable operational state.

Optionally, in order to avoid an abnormality of a medium voltage side of the buck-boost conversion circuit 220, it is possible to judge whether a high-voltage-side voltage of the buck-boost conversion circuit 220 is less than a target DC bus voltage, and to judge whether a medium-voltage-side voltage of the buck-boost conversion circuit 220 is less than a medium-voltage-side target voltage; if the high-voltage-side voltage of the buck-boost conversion circuit 220 is less than the target DC bus voltage and the medium-voltage-side voltage of the buck-boost conversion circuit 220 is less than the medium-voltage-side target voltage, it is judged that the soft start condition is met at the current moment. If the medium-voltage-side voltage of the buck-boost conversion circuit 220 is not less than the medium-voltage-side target voltage and the high-voltage-side voltage of the buck-boost conversion circuit 220 is not less than the target DC bus voltage, it is indicated that the soft start condition is not met at the current moment, and the DC bus capacitor $C_H$ of the buck-boost conversion circuit 220 does not need to be intermittently charged. The buck-boost conversion circuit 220 can directly enter a stable operational state and the above steps S101 to S102 can be executed.

Optionally, a DC bus capacitor $C_H$ of the buck-boost conversion circuit 220 can be intermittently charged according to a change of an inductor-current of a first inductor L. This step may comprise: monitoring the change of the inductor-current of the buck-boost conversion circuit 220; turning off, in a condition that it is monitored that the inductor-current of the first inductor L in the buck-boost conversion circuit 220 increases to not less than a first current threshold, a voltage loop and a current loop of the buck-boost conversion circuit 220 to prohibit charging the DC bus capacitor $C_H$ of the buck-boost conversion circuit 220; turning on, in a condition that an inductor-current of the first inductor L in the buck-boost conversion circuit 220 decreases to not more than a second current threshold, the voltage loop and the current loop of the buck-boost conversion circuit 220 to charge the DC bus capacitor $C_H$ of the buck-boost conversion circuit 220.

It should be understood that the second current threshold is smaller than the first current threshold. The specific value can be set according to actual conditions.

As a process of charging the DC bus capacitor $C_H$ of the buck-boost conversion circuit 220 by the voltage loop and the current loop is executed, the inductor-current of the first inductor L in the buck-boost conversion circuit 220 will gradually increase; when the inductor-current of the first inductor L increases to no less than the first current threshold, the voltage loop and the current loop of the buck-boost conversion circuit 220 are turned off. As the voltage loop and the current loop are turned off, the inductor-current of the first inductor L is caused to gradually decrease. When the inductor-current of the first inductor L in the buck-boost conversion circuit 220 decreases to no more than the second current threshold, it will be triggered to charge the DC bus capacitor $C_H$ of the buck-boost conversion circuit 220 by the voltage loop and the current loop again. Therefore, by repeating this cycle, it is possible to achieve an intermittent charging of the DC bus capacitor $C_H$ of the buck-boost conversion circuit 220.

Different from the above-mentioned embodiment, the intermittent charging of the DC bus capacitor $C_H$ of the buck-boost conversion circuit 220 may further comprise: in a condition that the boost switch tube S9 of the buck-boost conversion circuit 220 is continuously turned off, driving the buck switch tube S10 of the buck-boost conversion circuit 220 by a second drive signal which satisfies a second duty ratio, to intermittently charge the DC bus capacitor $C_H$ of the buck-boost conversion circuit 220. The second duty ratio is less than a second target duty ratio, to realize a charging of the DC bus voltage $C_H$ with an intermittent small current. It should be noted that the second target duty ratio is a duty ratio that the second drive signal for driving the buck-boost conversion circuit 220 needs, in a condition that the buck-boost conversion circuit 220 is in a stable operational state, to satisfy.

In order to reduce a control difficulty, the second duty ratio may be a fixed value. Optionally, during a soft start, the buck switch tube S10 can always be driven by the second drive signal with a duty ratio of 5% without any change.

The DC bus capacitor $C_H$ of the buck-boost conversion circuit 220 is intermittently charged until a high-voltage-side voltage of the buck-boost conversion circuit 220 reaches a target DC bus voltage, or until the high-voltage-side voltage reaches the target DC bus voltage and a medium-voltage-side voltage reaches a medium-voltage-side target voltage at the same time. It is indicated that the soft start of the buck-boost conversion circuit 220 is completed.

Optionally, an linearly amplifying a battery voltage of the energy storage module based on a resonant conversion circuit may comprise: correspondingly driving, based on a third drive signal and fourth drive signal with fixed duty ratios, upper and lower switch tubes of each bridge arm in each switch network of the resonant conversion circuit, the third drive signal being complementary to the fourth drive signal; and performing a fixed frequency control on an LLC resonant cavity of the resonant conversion circuit based on a first resonant frequency.

As shown in FIG. 4, the resonant conversion circuit 210 comprises a plurality of switch networks, each of which comprises at least one bridge arm. The third drive signal and the fourth drive signal are used together to drive each bridge arm of each switch network in the resonant conversion circuit 210. It can be understood that the third drive signal and the fourth drive signal may be a pair of complementary PWM signals. Upper and lower switch tubes of a same bridge arm of each switch network in the resonant conversion circuit 210 are driven by a pair of complementary PWM signals to achieve complementary turning-on of the upper and lower switch tubes in the same bridge arm.

As shown in FIG. 4, the resonant conversion circuit 210 may comprise a first switch network 211, a transformer T, an LLC resonant cavity 212, and a second switch network 213, which are sequentially cascaded. Optionally, the first switch network 211 may be a full-bridge topology composed of switch tubes S1, S2, S3, and S4; the second switch network 213 may be another full-bridge topology composed of switch tubes S5, S6, S7, and S8. The LLC resonant cavity 212 comprises a resonant inductor Lr, a resonant capacitor Cr, and a magnetizing Inductance Lm. The resonant conversion circuit 210 may further comprise a first capacitor $C_L$ cascaded before the first switch network 211 and a second capacitor $C_M$ cascaded after the second switch network 213. Based on this, the third drive signal is used to drive the switch tubes S1, S4, S5, and S8, and the fourth drive signal is used to drive the switch tubes S2, S3, S6, and S7. Therefore, when the switch tubes S1, S4, S5, and S8 are in an on state, the switch tubes S2, S3, S6, and S7 are in an off state; and when the switch tubes S1, S4, S5, and S8 are in the off state, the switch tubes S2, S3, S6, and S7 are in the on state.

It should be noted that the first resonant frequency is a resonant frequency $fr = \frac{1}{2\pi\sqrt{L_r \cdot C_r}}$ at which the resonant inductor Lr and the resonant capacitor Cr in the LLC resonant cavity 212 resonate together.

Since the third drive signal and the fourth drive signal each have fixed duty ratios, and a fixed frequency control is performed on the LLC resonant cavity 212 of the resonant conversion circuit 210 according to the first resonant frequency, and thus the resonant conversion circuit 210 is kept in a stable operational state. Therefore, resources for controlling can be greatly reduced. A difficulty of control algorithm can be reduced. A soft switching characteristic of LLC converter can be improved.

By simultaneously satisfying that the LLC resonant cavity 212 operates at the first resonant frequency and the fixed duty ratios of the third drive signal and the fourth drive signal are maintained at 50%, the battery voltage $U_{bat}$ of the energy storage module 10 is strongly correlated with the medium-voltage-side voltage $U_{mid}$ output by the resonant conversion circuit 210, and a linear amplification relationship of 1:N is strictly satisfied. Thus, a linear amplification of the battery voltage $U_{bat}$ of the energy storage module 10 can be achieved. Conditions for seamless switching of the energy storage DC-to-DC converter between the charging function and discharging function can be provided. 1:N is the turn ratio of the transformer T.

As shown in FIG. 5, optionally, a preset fixed duty ratio can be input into a second PWM signal generator 80, and a third drive signal for driving a first switch tube is output through a second PWM signal generator 80; a third drive signal is input into a second inverter 90, and a fourth drive signal for driving a second switch tube is output through the second inverter 90. The first switch tube and the second switch tube are correspondingly an upper switch tube and a lower switch tube on a same bridge arm in each switch network.

It should be understood that the upper and lower switch tubes on each bridge arm in each switch network of the resonant conversion circuit 210 may be correspondingly driven based on the third drive signal and the fourth drive signal with fixed duty ratios only after the soft start of the resonant conversion circuit 210 is completed.

Optionally, a process of a soft start of the resonant conversion circuit 210 may comprise: controlling duty ratios of a third drive signal and a fourth drive signal to gradually increase from a preset initial duty ratio until increasing to a fixed duty ratio. Before a soft start, the control device may further detect, in response to a first start instruction for the resonant conversion circuit 210, whether the resonant conversion circuit 210 has a fault; and if the resonant conversion circuit 210 has no fault, the resonant conversion circuit 210 is controlled to perform the soft start.

It should be understood that the initial duty ratio is less than the preset fixed duty ratio. The duty ratios of the third drive signal and the fourth drive signal are controlled to gradually increase from the initial duty ratio according to a preset increasing strategy until the duty ratios of the third drive signal and the fourth drive signal are increased to the fixed duty ratio, indicating that the soft start of the resonant conversion circuit 210 is completed.

Optionally, the preset increasing strategy may refer to: controlling the duty ratios of the third drive signal and the fourth drive signal to gradually increase according to any one of ways for increasing duty ratio, such as increasing a duty ratio linearly, increasing a duty ratio logarithmically, and increasing a duty ratio exponentially.

Optionally, any two or more of the above-mentioned ways for increasing duty ratio may be combined to control the duty ratios of the third drive signal and the fourth drive signal to gradually increase in multiple segments of control. Different segments of control use different ways for increasing duty ratio. Optionally, the duty ratios of the third drive signal and the fourth drive signal can be controlled to gradually increase from an initial duty ratio to a certain duty ratio first according to a way of linearly increasing duty ratio; and then the duty ratios of the third drive signal and the fourth drive signal can be controlled to continue to gradually increase according to a way of second power increasing duty ratio until the duty ratios of the third drive signal and the fourth drive signal are increased to be a fixed duty ratio.

It should be understood that the initial duty ratio may be a value close to zero. In the process of implementation, the initial duty ratio may be, but not limited to, a value between 1% and 10% to prevent an overcurrent caused by excessive capacitance on a medium voltage side and a high voltage side. The fixed duty ratio is the duty ratios of the third drive signal and the fourth drive signal in a condition that the resonant conversion circuit 210 is in a stable operational state. Optionally, if the resonant conversion circuit 210 in a stable operational state needs to maintain the duty ratios of the third drive signal and the fourth drive signal at 50%, it is indicated that, after the duty ratio of the third drive signal and the fourth drive signal is gradually increased to be 50%, the process of soft start of the resonant conversion circuit 210 is completed. Then the duty ratios of the third drive signal and the fourth drive signal are maintained at 50% and no longer increases.

Optionally, if the current control parameter is a current output power and the target control parameter is a target output power, a duty ratio of the first drive signal and a duty ratio of the second drive signal can be adjusted based on a relationship between the current output power and the target output power.

In the process of implementation, a first PI adjustment can be performed based on the current output power and the target output power to obtain a reference current; the current inductor-current of the buck-boost conversion circuit is obtained, and a second PI adjustment is performed based on the current inductor-current and the reference current to obtain a duty ratio parameter; and based on the duty ratio parameter, the duty ratio of the first drive signal and the duty ratio of the second drive signal are adjusted. This process of implementation may refer to an embodiment when the current control parameter is the current DC bus voltage, and will not be described in detail here.

Optionally, if the current control parameter is a current inductor-current and the target control parameter is a preset reference current, the duty ratio of the first drive signal and the duty ratio of the second drive signal can be adjusted based on a magnitude relationship between the current inductor-current and the reference current.

In the process of implementation, the current inductor-current and reference current of the buck-boost conversion circuit can be obtained, and a second PI adjustment is performed based on the current inductor-current and the reference current to obtain a duty ratio parameter; and based on the duty ratio parameter, the duty ratio of the first drive signal and the duty ratio of the second drive signal are adjusted. This process of implementation is similar to the embodiment when the current control parameter is the current DC bus voltage, except that the reference current is a pre-given fixed value rather than calculated in step S1021. Seamless switching of the charging function and discharging function is achieved through a control of the inductor-current.

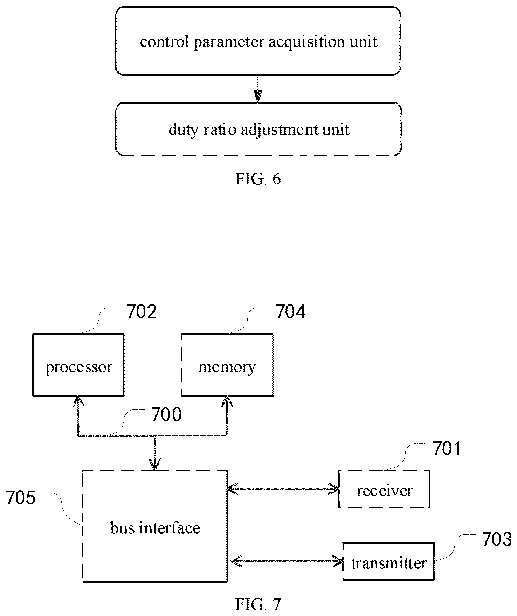

Based on the same concept, an operational control apparatus for an energy storage DC-to-DC converter is provided according to an embodiment of the invention. The energy storage DC-to-DC converter is used to connect an energy storage module into a DC bus. The energy storage DC-to-DC converter comprises a resonant conversion circuit and a buck-boost conversion circuit which are used to be sequentially cascaded with the energy storage module. As shown in FIG. 6, the operational control apparatus for the energy storage DC-to-DC converter may comprise: a control parameter acquisition unit 601, which is used to acquire a current DC bus voltage in a condition that a battery voltage of the energy storage module is linearly amplified based on the resonant conversion circuit; and a duty ratio adjustment unit 602, which is used to adjust a duty ratio of a first drive signal and a duty ratio of a second drive signal based on a magnitude relationship between the current control parameter and a target control parameter, the first drive signal being complementary to the second drive signal, the first drive signal and the second drive signal being used to correspondingly drive a boost switch and a buck switch of the buck-boost conversion circuit.

It can be understood that the current control parameter is a current DC bus voltage, and the target control parameter is a target DC bus voltage.

It can be understood that the current control parameter is a current output power of the energy storage DC-to-DC converter, and the target control parameter is a target output power of the energy storage DC-to-DC converter.

It can be understood that the duty ratio adjustment unit 602 may comprise: a first adjustment subunit, used to perform a first PI adjustment based on the current output power and the target output power, or to perform the first PI adjustment based on the current DC bus voltage and the target DC bus voltage to obtain a reference current; a second adjustment subunit, used to obtain a current inductor-current of the buck-boost conversion circuit 220, and perform a second PI adjustment based on the current inductor-current and the reference current to obtain a duty ratio parameter; and a third adjustment subunit, used to adjust a duty ratio of the first drive signal and a duty ratio of the second drive signal based on the duty ratio parameter.

It can be understood that the third adjustment subunit may be used to: input the duty ratio parameter into a first PWM signal generator, and output a first drive signal for driving the boost switch through the first PWM signal generator; and input the first drive signal into a first inverter, and output a second drive signal for driving the buck switch through the first inverter.

It can be understood that the first adjustment unit may be used to: determine a voltage deviation between the current DC bus voltage and the target DC bus voltage; perform a first PI adjustment on the voltage deviation through a voltage PI regulator to obtain a current calculation result; and compare a preset current limit range with the current calculation result, and determine the reference current based on a result of the comparison.

It can be understood that the second regulation subunit can be used to: determine a current deviation between the current inductor-current and the reference current; perform a second PI adjustment on the current deviation through a current PI regulator to obtain a duty ratio calculation result; and compare a preset duty ratio limit range with the duty ratio calculation result, and determine the duty ratio parameter based on a result of the comparison.

It can be understood that the current control parameter is a current inductor-current of the buck-boost conversion circuit, and the target control parameter is a reference current of the buck-boost conversion circuit.

It can be understood that the duty ratio adjustment unit 602 may comprise: a second adjustment subunit, used to obtain a current inductor-current and the reference current of the buck-boost conversion circuit 220, and perform a second PI adjustment based on the current inductor-current and the reference current to obtain a duty ratio parameter; and a third adjustment subunit, used to adjust the duty ratio of the first drive signal and the duty ratio of the second drive signal based on the duty ratio parameter.

It can be understood that the resonant conversion circuit comprises an LLC resonant cavity and at least one switch network. Each of the switch networks comprises at least one bridge arm. The operational control apparatus for the energy storage DC-to-DC converter also comprises a linear amplification unit, which is used to: correspondingly drive upper and lower switch tubes of each bridge arm in each switch network of the resonant conversion circuit based on a third drive signal and a fourth drive signal with a fixed duty ratio, the third drive signal is complementary to the fourth drive signal; and perform a fixed frequency control on the LLC resonant cavity based on a first resonant frequency.

It can be understood that the linear amplification unit can also be used to: input a preset fixed duty ratio into a second PWM signal generator, and output a third drive signal for driving a first switch tube through the second PWM signal generator; and input the third drive signal into a second inverter, and output a fourth drive signal for driving a second switch tube through the second inverter. The first switch tube and the second switch tube are correspondingly an upper switch tube and a lower switch tube of a same bridge arm in each switch network of the resonant conversion circuit.

It can be understood that the fixed duty ratios of the third drive signal and the fourth drive signal may be 50%.

Functions of various functional units in the above apparatus have been described in detail in the embodiments of the operational control method for the energy storage DC-to-DC converter provided in the embodiment of the invention, and will not be elaborated here.

Based on the same concept, an energy storage system, comprising an energy storage module, an energy storage DC-to-DC converter and a control device is provided according to an embodiment of the invention. The energy storage DC-to-DC converter is used to connect an energy storage module into a DC bus. The energy storage DC-to-DC converter comprises a resonant conversion circuit and a buck-boost conversion circuit which are sequentially cascaded with the energy storage module. As shown in FIG. 7, the control device may comprise a memory 704, a processor 702, and a computer program stored in the memory 704 and executable on the processor 702. The processor 702 executes the program to implement steps described in any embodiment of the operational control method for the energy storage DC-to-DC converter.

In FIG. 7, a bus architecture is represented by bus 700, which may comprise any number of interconnected buses and bridges. The by bus 700 links together various circuits comprising one or more processors represented by processor 702 and one or more memories represented by memory 704. The bus 700 may also link together various other circuits such as peripheral devices, voltage regulators, and power management circuits, which are well known in the art and therefore will not be described herein. A bus interface 706 provides an interface between the bus 700 and a receiver 701, and an interface between the bus 700 and a transmitter 703 The receiver 701 and the transmitter 703 may be the same element, i.e., a transceiver, which provides a unit for communicating with various other devices over a transmission medium. The processor 702 is responsible for managing the bus 700 and general processing, while the memory 704 may be used to store data used by the processor 702 when performing operations.

One or more technical solutions provided by the embodiments of the invention achieve at least the following technical effects or advantages: by linearly amplifying the battery voltage of the energy storage module based on the resonant conversion circuit, a pair of complementary drive signals, namely a first drive signal and a second drive signal, are used to complementarily drive the boost switch and the buck switch of the buck-boost conversion circuit, to always maintain the DC bus voltage at the target DC bus voltage. Whether the energy storage module is actually in a charging process or a discharging process, and magnitudes of a charging and discharging power are completely determined by a power required by an external load or a power that a charging power source can provide. Furthermore, it is no longer required to turn on the boost switch when charging and the buck switch when discharging to switch the charging function and discharging function, and it is also no longer required to shut down a current state and then switch to a discharging state, or to shut down the current state and then switch to a charging state. Thus, the boost and buck switches in the buck-boost conversion circuit are always driven by a pair of complementary drive signals, and it is no longer required to execute a judgment logic for switching the charging function and discharging function, thus avoiding a delay in switching between the charging function and discharging function, and a seamless switching between the charging function and discharging function of a two-stage energy storage DC-to-DC converter can be achieved, and in turn a demand for rapid conversion of charging and discharging of the energy storage DC-to-DC converter in the energy storage system can be satisfied.

The invention is described with reference to flowcharts and/or block diagrams of methods, devices (systems), and computer program products according to embodiments of the invention. It should be understood that each process and/or block in the flowchart and/or block diagram, and a combination of the processes and/or blocks in the flowchart and/or block diagram can be implemented by computer program instructions. These computer program instructions can be provided to a processor of a general-purpose computer, a special-purpose computer, an embedded processor or other programmable data processing device to produce a machine, and thus the instructions executed by the processor of the computer or other programmable data processing device produce a device for implementing the functions specified in one or more flows in the flowchart and/or one or more blocks in the block diagram.

These computer program instructions may also be stored in a computer-readable memory that can direct a computer or other programmable data processing device to work in a specific manner, so that the instructions stored in the computer-readable memory produce a manufactured product comprising an instruction device that implements the functions specified in one or more processes in the flowchart and/or one or more blocks in the block diagram.

These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more blocks in the block diagram.

Although some embodiments of the invention have been described, additional changes and modifications may be made to these embodiments once those skilled in the art understand the basic inventive concepts. Therefore, it is intended that the appended claims be interpreted as comprising the above-described embodiments and all changes and modifications that fall within the scope of the invention.

Obviously, those skilled in the art can make various changes and modifications to the invention without departing from the spirit and scope of the invention. Thus, if these modifications and variations of the invention fall within the scope of the claims of the invention and their equivalent technologies, the invention is also intended to comprise these modifications and variations.

The above descriptions are merely embodiments of the invention and are not intended to limit the invention. For those skilled in the art, the invention may have various modifications and changes. Any modifications, equivalent substitutions, improvements, etc., made within the spirit and principles of this invention should be included in the scope of the claims of this invention.

**Claims**

1. An operational control method for an energy storage DC-to-DC converter, wherein the energy storage DC-to-DC converter is used to connect an energy storage module to a DC bus, and comprises a resonant conversion circuit and a buck-boost conversion circuit which are sequentially cascaded with the energy storage module, the method comprises:

   acquiring, in a condition of linearly amplifying a battery voltage of the energy storage module based on the resonant conversion circuit, a current control parameter; and
   adjusting a duty ratio of a first drive signal and a duty ratio of a second drive signal based on a magnitude relationship between the current control parameter and a target control parameter, the first drive signal being complementary to the second drive signal, the first drive signal and the second drive signal being used to correspondingly drive a boost switch and a buck switch of the buck-boost conversion circuit.

2. The method according to claim 1, wherein the current control parameter is a current DC bus voltage, and the target control parameter is a target DC bus voltage.

3. The method according to claim 1, wherein the current control parameter is a current output power of the energy storage DC-to-DC converter, and the target control parameter is a target output power of the energy storage DC-to-DC converter.

4. The method according to claim 2 or 3, wherein said adjusting the duty ratio of the first drive signal and the duty ratio of the second drive signal based on the magnitude relationship between the current control parameter and the target control parameter, comprises:

   performing a first PI adjustment based on the current output power and the target output power, or performing the first PI adjustment based on the current DC bus voltage and the target DC bus voltage, to obtain a reference current;
   obtaining a current inductor-current of the buck-boost conversion circuit, and performing a second PI adjustment based on the current inductor-current and the reference current to obtain a duty ratio parameter; and
adjusting the duty ratio of the first drive signal and the duty ratio of the second drive signal based on the duty ratio parameter.

5. The method of claim 4, wherein said adjusting the duty ratio of the first drive signal and the duty ratio of the second drive signal based on the duty ratio parameter, comprises:

   inputting the duty ratio parameter into a first PWM signal generator, and outputting the first drive signal for driving the boost switch through the first PWM signal generator; and
   inputting the first drive signal into a first inverter, and outputting the second drive signal for driving the buck switch through the first inverter.

6. The method according to claim 4, wherein said performing the first PI adjustment based on the current DC bus voltage and the target DC bus voltage to obtain the reference current, comprises:

   determining a voltage deviation between the current DC bus voltage and the target DC bus voltage;
   performing the first PI adjustment on the voltage deviation through a voltage PI regulator to obtain a current calculation result; and
   comparing a preset current limit range with the current calculation result, and determining the reference current based on a result of the comparison.

7. The method according to claim 4, wherein said performing the second PI adjustment based on the current inductor-current and the reference current to obtain the duty ratio parameter, comprises:

   determining a current deviation between the current inductor-current and the reference current;
   performing the second PI adjustment on the current deviation through a current PI regulator to obtain a duty ratio calculation result; and
   comparing a preset duty ratio limit range with the duty ratio calculation result, and determining the duty ratio parameter based on a result of the comparison.

8. The method of claim 1, wherein the current control parameter is a current inductor-current of the buck-boost conversion circuit, and the target control parameter is a reference current of the buck-boost conversion circuit.

9. The method according to claim 8, wherein said adjusting the duty ratio of the first drive signal and the duty ratio of the second drive signal based on the magnitude relationship between the current control parameter and the target control parameter, comprises:

obtaining the current inductor-current and the reference current, and performing a second PI adjustment based on the current inductor-current and the reference current to obtain a duty ratio parameter; and
adjusting the duty ratio of the first drive signal and the duty ratio of the second drive signal based on the duty ratio parameter.

10. The method according to claim 1, wherein the resonant conversion circuit comprises an LLC resonant cavity and at least one switch network, each switch network comprising at least one bridge arm, and said linearly amplifying the battery voltage of the energy storage module based on the resonant conversion circuit, comprises:

correspondingly driving, based on a third drive signal and a fourth drive signal with fixed duty ratios, upper and lower switch tubes of each bridge arm in each switch network of the resonant conversion circuit, the third drive signal being complementary to the fourth drive signal; and
performing a fixed frequency control on the LLC resonant cavity of the resonant conversion circuit based on a first resonant frequency.

11. The method according to claim 10, further comprising:

inputting the fixed duty ratios which are preset into a second PWM signal generator, and outputting the third drive signal for driving a first switch tube through the second PWM signal generator; and
inputting the third drive signal into a second inverter, and outputting the fourth drive signal for driving a second switch tube through the second inverter,
wherein the first switch tube and the second switch tube are correspondingly an upper switch tube and a lower switch tube of a same bridge arm in each switch network of the resonant conversion circuit.

12. The method of claim 10, wherein the fixed duty ratios of the third drive signal and the fourth drive signal are 50%.

13. An operational control apparatus for an energy storage DC-to-DC converter, wherein the energy storage DC-to-DC converter is used to connect an energy storage module to a DC bus, the energy storage DC-to-DC converter comprising a resonant conversion circuit and a buck-boost conversion circuit which are sequentially cascaded with the energy storage module, the apparatus comprises:

a control parameter acquisition unit, configured for acquiring, in a condition of linearly amplifying a battery voltage of the energy storage module based on the resonant conversion circuit, a current control parameter; and
a duty ratio adjustment unit, configured for adjusting a duty ratio of a first drive signal and a duty ratio of a second drive signal based on a magnitude relationship between the current control parameter and a target control parameter, the first drive signal being complementary to the second drive signal, the first drive signal and the second drive signal being used to correspondingly drive a boost switch and a buck switch of the buck-boost conversion circuit.

14. An energy storage system, comprising an energy storage module, an energy storage DC-to-DC converter and a control device, wherein,

the energy storage DC-to-DC converter is used to connect the energy storage module to a DC bus;
the energy storage DC-to-DC converter comprises a resonant conversion circuit and a buck-boost conversion circuit which are sequentially cascaded with the energy storage module; and
the control device comprises a memory, a processor and a computer program stored in the memory and executable on the processor, the processor executing the computer program to implement the operational control method for the energy storage DC-to-DC converter according to any one of claims 1 to 12.

10　　　　20　　210　　　220　　　　　　30

| energy storage module | | resonant conversion circuit | buck-boost conversion circuit | | control device |

FIG. 1

acquiring, in a condition of linearly amplifying a battery voltage of the energy storage module based on the resonant conversion circuit, a current control parameter; ～S101

adjusting a duty ratio of a first drive signal and a duty ratio of a second drive signal based on a magnitude relationship between the current control parameter and a target control parameter, the first drive signal being complementary to the second drive signal, the first drive signal and the second drive signal being used to correspondingly drive a boost switch and a buck switch of the buck-boost conversion circuit ～S102

FIG. 2

FIG. 3

FIG. 4

FIG. 5

control parameter acquisition unit

duty ratio adjustment unit

FIG. 6

702

704

processor

memory

700

701

705

bus interface

receiver

703

transmitter

FIG. 7

## INTERNATIONAL SEARCH REPORT

| International application No. |
|---|
| **PCT/CN2023/109076** |

| A. | CLASSIFICATION OF SUBJECT MATTER |
|---|---|

H02M 3/335(2006.01)i; H02M 3/338(2006.01)i

According to International Patent Classification (IPC) or to both national classification and IPC

| B. | FIELDS SEARCHED |
|---|---|

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 谐振, 升降压, 占空比, BUCK-BOOST, LLC, PI, PWM

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 110719046 A (CENTRAL SOUTH UNIVERSITY) 21 January 2020 (2020-01-21) description, paragraphs 8-104, and figures 1-7 | 1-14 |
| Y | CN 108574411 A (ANHUI UNIVERSITY OF TECHNOLOGY) 25 September 2018 (2018-09-25) description, paragraphs 65-77, and figure 1 | 1-14 |
| Y | CN 106849686 A (HEFEI UNIVERSITY OF TECHNOLOGY) 13 June 2017 (2017-06-13) description, paragraphs 51-69, and figures 1-2 | 10-12, 14 |
| A | CN 114498833 A (SHENZHEN CITY KEHUA HENGSHENG TECHNOLOGY CO., LTD.) 13 May 2022 (2022-05-13) entire document | 1-14 |
| A | US 2015131329 A1 (FUTUREWEI TECHNOLOGIES, INC.) 14 May 2015 (2015-05-14) entire document | 1-14 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 September 2023** | **12 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/109076**

| Patent document cited in search report | | | Publication date (day/month/year) | Patent family member(s) | | | Publication date (day/month/year) |
|---|---|---|---|---|---|---|---|
| CN | 110719046 | A | 21 January 2020 | None | | | |
| CN | 108574411 | A | 25 September 2018 | None | | | |
| CN | 106849686 | A | 13 June 2017 | None | | | |
| CN | 114498833 | A | 13 May 2022 | None | | | |
| US | 2015131329 | A1 | 14 May 2015 | US | 9479073 | B2 | 25 October 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310097462